Europäisches Patentamt

**European Patent Office**

Office européen des brevets

(19)

(11) Numéro de publication: **0 069 928**
**A1**

(12)

# DEMANDE DE BREVET EUROPEEN

(21) Numéro de dépôt: **82105872.4**

(22) Date de dépôt: **01.07.82**

(51) Int. Cl.³: **H 04 B 1/66**

(30) Priorité: **06.07.81 FR 8113233**

(43) Date de publication de la demande:
**19.01.83 Bulletin 83/3**

(84) Etats contractants désignés:
**DE FR GB NL SE**

(71) Demandeur: **SINTRA-ALCATEL Société Anonyme dite:**
**26, rue Malakoff B.P. 245**
**F-92600 Asnieres Cedex(FR)**

(72) Inventeur: **Burgert, Albert**
**14, rue de Strasbourg**
**F-94110 Arcueil(FR)**

(74) Mandataire: **Weinmiller, Jürgen et al,**
**Zeppelinstrasse 63**
**D-8000 München 80(DE)**

(54) **Système de transmission à étalement de spectre.**

(57) La présente invention est relative aux systèmes de transmission à étalement de spectre au moyen d'une modulation par retournement de phase selon un code binaire pseudoaléatoire. Elle a pour objet un système du genre précité avec un code binaire pseudoaléatoire d'étalement du spectre des fréquences dont le polynôme générateur a un nombre impair de termes ayant, en réception, pour désétaler le signal reçu, un filtre non linéaire, non récursif à domaine de temps constitué d'une ligne à retard (20) à prises intermédiaires simulant pour le signal reçu le registre à décalage défini par le polynône générateur et d'une chaîne de multiplicateur (21, 22) interconnectant l'entrée, les prises intermédiaires et la sortie de la ligne à retard (20) conformément au polynôme générateur.

FIG. 2

EP 0 069 928 A1

## Système de transmission à étalement de spectre

La présente invention est relative aux systèmes de transmission à étalement de spectre et concerne plus particulièrement ceux dans lesquels l'étalement du spectre est obtenu par une modulation par retournement de phase à l'aide de séquences binaires pseudoaléatoire.

L'intérêt de l'étalement du spectre d'un signal d'information au cours de sa transmission ressort des travaux de Shannon sur la théorie statistique des communications qui montrent que la capacité d'une voie à transférer sans erreur de l'information est d'autant plus grande que la largeur de la bande est elle même grande même si le rapport signal/bruit diminue du fait de l'augmentation de la largeur de bande. Divers avantages découlent du faible rapport signal/bruit autorisé par l'étalement du spectre notamment une discrétion, les écoutes et la localisation étant rendues plus difficiles du fait que le signal reçu est noyé dans les divers bruits de transmission et une grande insensibilité au brouillage.

Une technique très utilisée consiste, à l'émission, à étaler le spectre de la modulation de message en multipliant cette modulation par un code binaire pseudoaléatoire d'étalement des fréquences présentant une largeur de bande très supérieure à celle de la modulation de message et, à la réception, à désétaler le signal reçu en le multipliant par le même code binaire pseudoaléatoire d'étalement des fréquences puis à récupérer la modulation de message par un filtrage à bande étroite. Le désétalement du signal reçu met à profit les caractéristiques spécifiques de la fonction d'autocorrélation d'une séquence binaire pseudoaléatoire qui vaut l'unité pour un décalage nul et l'inverse de son nombre d'éléments pour tout autre valeur du décalage.

Les sytèmes de transmission connus, employant la technique précitée présentent l'inconvénient de comporter en réception des circuits relativement complexes pour engendrer localement un code binaire pseudoaléatoire d'étalement identique et synchrone de celui d'émission.

Certains systèmes connus de transmission utilisant pour l'étalement des fréquences une modulation par retournement de phase selon un code binaire pseudoaléatoire n'ont pas ces inconvénients. Ils comportent, en tête du circuit de réception un filtre à ondes de surface pour code biphase fixe équivalent à une ligne à retard avec des prises intermédiaires séparées d'un intervalle de temps élémentaire égal à l'inverse du débit binaire du code d'étalement, munies ou non d'inverseur selon la valeur de l'élément binaire de même rang dans le code d'étalement, le rang des prises étant compté en remontant vers l'entrée, et réunies à la sortie. Le filtre effectue la convolution du signal reçu avec une version figée du code d'étalement. Etant données les propriétés de la fonction d'autocorrélation d'une séquence binaire pseudoaléatoire, cette convolution est en moyenne nulle sauf une fois par période du code d'étalement où la version figée du filtre se trouve en synchronisme avec la version émise et où elle représente la modulation de message.

Ces systèmes sont limités à la transmission d'une modulation de message qui peut être échantillonnnée avec une périodicité inférieure ou égale à celle du code d'étalement. Pour augmenter la vitesse des messages il faut diminuer la période du code d'étalement ce qui nuit à l'uniformité de l'étalement du spectre.

Les techniques d'étalement du spectre sont abondamment décrites dans le livre de R.C. Dixon intitulé "Spread Spectrum System" et paru en 1976 chez John Wiley & sons. Celle des filtres à ondes de surface pour code biphase fixe est évoquée dans l'article de M.G. Holland et L.T. Clairborne intitulé "Practical Surface Acoustic Wave Device" qui est paru dans la revue "Proceedings of the IEEE, vol.62 n° 5 mai 1974 p.582 à 611 accompagné d'une importante bibliographie.

La présente invention a pour but un système de transmission avec étalement du spectre par code binaire pseudoaléatoire ne nécessitant pas, en réception un générateur local de code d'étalement synchronisé avec le générateur de code d'étalement d'émission et ne présentant pas les limitations de vitesse de message des systèmes de ce genre précédemment cités.

Elle a pour objet un système de transmission à étalement de spectre au moyen d'une modulation pour retournement de phase selon un code binaire pseudoaléatoire dont le polynôme générateur comporte un nombre impair de termes avec en réception pour désétaler le signal reçu, un filtre non linéaire, non récursif à domaine de temps constitué d'une ligne de retard à prises intermédiaires simulant, pour le signal reçu, le registre à décalage défini par le polynôme générateur et d'une chaîne de multiplicateurs interconnectant l'entrée, les prises intermédiaires et la sortie de la ligne à retard conformément au polynôme générateur.

La ligne à retard est avantageusement de type électrique, à constantes localisées ou réparties ou de type physique à ondes de surface ou ondes de volume.

Les multiplicateurs peuvent être des modulateurs en anneau ou des multiplicateurs analogiques.

D'autre caractéristiques et avantages de l'invention ressortiront des revendications jointes et de la description ci-après d'un mode de réalisation donné à titre d'exemple. Cette description sera faite en regard du dessin dans lequel :

- la figure 1 représente de manière schématique un codeur de type connu utilisé à l'émission pour l'étalement du spectre d'une modulation de message à l'aide d'un code binaire pseudoaléatoire,

- la figure 2 représente de manière schématique un décodeur selon l'invention qui peut être utilisé pour désétaler un signal en provenance du codeur de la figure 1,

- la figure 3 représente un système de transmission à étalement de spectre selon l'invention adapté à la transmission d'une information modulant en fréquence une porteuse,

- la figure 4 représente un système de transmission à étalement de spectre selon l'invention adapté à la transmission d'une information disponible sous forme numérique

- et la figure 5 représente une version plus élaborée du décodeur de la figure 2.

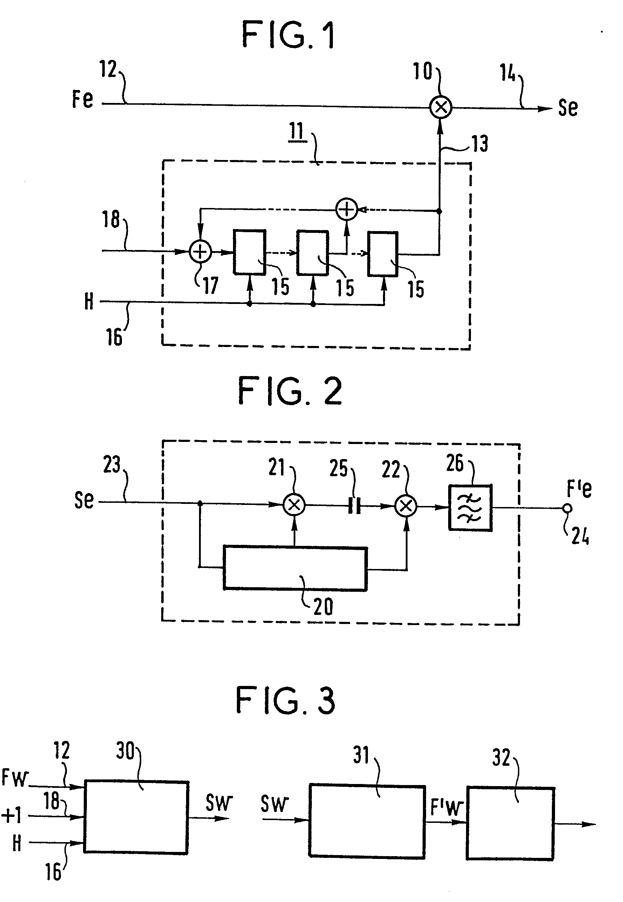

On distingue sur la figure 1 un codeur de type connu permettant d'engendrer un signal de transmission à étalement de spectre au moyen d'une modulation par retournement de phase selon un code binaire pseudoaléatoire. Ce codeur comporte essentiellement un modulateur en anneau 10 et un générateur de séquences binaires pseudoaléatoires 11.

Le modulateur en anneau 10 reçoit sur une entrée 12 une porteuse Fe et sur une autre entrée 13 le signal de sortie du générateur de séquences binaires pseudoaléatoires 11. Il fait subir à la porteuse Fe un retournement de phase chaque fois que la sortie du générateur de séquences binaires pseudoaléatoires 11 change de niveau et la délivre sous la forme d'un signal étalé Se sur sa sortie 14.

Le générateur de séquences binaires pseudoaléatoires 11 est un filtre linéaire récursif qui comporte de manière bien connue, un registre à décalage 15 avec une entrée d'horloge 16 commune à ses différents étages et avec une logique d'addition modulo 2 rebouclant à son entrée les sorties de son dernier étage et de certains de ses étages intermédiaires. Il présente en outre une porte logique du type "ou exclusif" 17 qui est intercalée à l'entrée du registre à décalage 15 et qui permet, par son entrée libre 18, d'introduire une éventuelle information binaire dans la séquence binaire pseudoaléatoire.

L'information à transmettre présente une largeur de spectre très inférieure à la cadence du signal d'horloge H qui rythme le débit du générateur de séquences binaires pseudoaléatoires. Elle peut soit moduler la porteuse Fe, l'entrée 18 du générateur de séquences binaires pseudoaléatoires étant maintenue à un niveau logique constant, soit être appliquée sous forme binaire à l'entrée 18 du générateur de séquences binaires pseudoaléatoires.

La séquence binaire pseudoaléatoire constituant le code d'étalement des fréquences est entièrement déterminée par la longueur du registre à décalage 15 et par les étages intermédiaires de ce dernier concernés par le rebouclage, caractéristiques que l'on a l'habitude de définir par un polynôme dit "polynôme générateur de la séquence binaire pseudoaléatoire". Ce polynôme a pour puissance le nombre d'étages du registre à décalage avec 1 pour coefficient du terme de degré le plus élevé et -1 ou 0 pour chaque terme de degré intermédiaire selon que la prise intermédiaire du registre à décalage dont le rang compté à partir de la sortie du registre correspond à son degré est ou n'est pas intéressée par le rebouclage. Dans le cas du codeur représenté à la figure 1 où le registre à décalage a n étage et où le rebouclage n'intéresse que la p ième prise comptée depuis l'entrée du registre à décalage le polynôme générateur de la séquence pseudoaléatoire du code d'étalement des fréquences a pour valeur :

$$h(x) = x^n - x^{n-p} - 1$$

Les propriétés des séquences binaires pseudoaléatoires et de leurs polynômes générateurs ont été largement étudiées et l'on peut, pour davantage de précision, se référer au livre R.C. Dixon précédemment cité ou encore au livre de W.W. Peterson intitulé "Error correcting codes" publié par John Wiley and sons Ltd New-York (1961). il suffit de remarquer, pour la suite que le polynôme générateur définit le registre à décalage (longueur et prises intermédiaires) et la logique d'addition modulo 2 avec laquelle il faut le reboucler pour obtenir la séquence binaire pseudoaléatoire et que la parité du nombre de termes du polynôme générateur correspond à celle du nombre des prises intermédiaires du registre à décalage interessées par le rebouclage.

La figure 2 représente un décodeur d'un système de transmission selon l'invention équipé du codeur de la figure 1. Ce décodeur qui permet de désétaler le signal de transmission comporte un filtre non linéaire, non récursif à domaine de temps formé d'une ligne à retard 20 avec une prise intermédiaire et sa sortie couplées à son entrée par une chaîne de multiplicateurs 21, 22 conformément au polynôme générateur de la séquence binaire pseudoaléatoire du code d'étalement des fréquences utilisé à l'émission dans le codeur de la figure 1.

La ligne à retard 20 est une ligne à retard analogique simulant le registre à décalage 15 du générateur de code d'étalement de fréquences 11 d'émission mais adaptée à la bande des fréquences du signal transmis Se. Elle a le même nombre de prises intermédiaires que ce registre 15 et les retards obtenus sur ses prises intermédiaires et sur sa sortie sont identiques à ceux obtenus sur les prises intermédiaires et la sortie de ce registre à décalage 15.

Elle est avantageusement du type à ondes de surface ou à ondes de volume mais elle peut également être du type électrique à constantes localisées ou réparties.

Le décodeur reçoit le signal à spectre étalé Se sur une entrée 23 reliée à l'entrée de la ligne à retard 20 et à une entrée d'une chaîne de multiplicateur 21, 22 dont les autres entrées sont reliées à la prise intermédiaire et à la sortie de la ligne à retard 20 et dont la sortie 24 constitue la sortie du décodeur.

Les multiplicateurs 21, 22 peuvent être des modulateurs en anneau.

.Un condensateur de découplage 25 est intercalé entre les deux multiplicateurs 21, 22 pour arrêter la composante continue engendrée dans le multiplicateur 21 et un filtre passe-bande 26 est disposé en sortie de la chaîne pour filtrer le signal désétalé dans la bande d'information utile.

D'une manière générale, la chaîne de multiplicateurs peut comporter plus de deux éléments. Son nombre d'éléments doit néanmoins être pair car, comme on le verra par la suite, on ne retrouve la fréquence de la porteuse Fe qu'au bout d'un nombre pair de multiplicateurs. Comme il y a un multiplicateur par prise intermédiaire et un pour la sortie de la ligne à retard, leur nombre est égal au nombre de termes du polynôme générateur de la séquence binaire pseudoaléatoire du code d'étalement des fréquences diminué d'une unité de sorte que la condition de parité du nombre de multiplicateurs de la chaîne équivaut à une condition d'imparité du nombre de termes du polynôme générateur.

Pour montrer que le décodeur de la figure 2 désétale le signal reçu Se on peut étudier les transformations qu'il impose à un signal reçu de la forme :

$$Se = \sin (wt + \Theta (t))$$

Ce signal Se est appliqué sur l'une des entrées du multiplicateur 21 tandis que l'autre reçoit un signal de la prise intermédiaire de la ligne à retard 20 qui par hypothèse (simulation du registre à décalage 15) présente un retard de p moments T du code d'étalement des fréquences utilisé à l'émission. Ce signal disponible sur la prise intermédaire à la forme :

$$\sin\left[w(t - pT) + \theta(t - pT)\right]$$

L'un des produits de sortie du multiplicateur 21 est une composante continue tandis que l'autre est de la forme :

$$-\frac{1}{2}\cos\left[w(2t - pT) + \theta(t - pT) + \theta(t)\right]$$

Le deuxième multiplicateur 22 reçoit ce signal sur une entrée et sur l'autre le signal de sortie de la ligne à retard 20 :

$$\sin\left[w(t - nT) + \theta(t - nT)\right]$$

Le deuxième multiplicateur 22 engendre une harmonique 3 arrêtée par le filtre passe-bande 26 et une composante de la forme :

$$\frac{1}{2}\sin\left[w(t-nT-pT) + \theta(t) - \theta(t-nT) + \theta(t-pT)\right]$$

Cette composante, qui est le signal de sortie Fé, est à la fréquence du signal reçu Se et présente par rapport à ce dernier un retard constant :

$$(n - p)\ T$$

et un écart de phase :

$$\theta(t) - \theta(t-nT) + \theta(t-pT)$$

En remarquant, que le signal Se ayant subi une modulation par retournement de phase avec des moments élémentaires de période T, les états de phase $\theta(t)$, $\theta(t-nT)$ et $\theta(t-pT)$ diffèrent entre eux de 0 ou $\pi$ et que leur addition ou soustraction sont équivalentes à $2K\pi$ près à une addition modulo 2, on s'aperçoit que le filtre est équivalent, du point de vue des états de phase, à un filtre linéaire non récursif qui présente comme fonction de transfert le polynôme générateur de la séquence binaire pseudoaléatoire du code d'étalement des fréquences. Or, il est bien connu d'utiliser le filtre linéaire récursif formant le générateur de séquences binaires pseudoaléatoires d'émission en combinaison avec un tel filtre linéaire non recursif pour brouiller et débrouiller une suite de signaux binaires. On peut se rapporter par exemple pour la description de brouilleur et débrouilleur de ce genre à l'article de T.E.

Savage intitulé "Some Simple Self-Synchronizing Digital Data Scramblers" paru dans le B.S.T.J. février 1967 p.443 à 487. Il en résulte que le signal Fé en sortie du décodeur a sa phase débrouillée c'est-à-dire qu'il est une réplique du signal d'entrée Fe du codeur de la figure 1 modulé par retournement de phase au moyen de l'information binaire appliquée à l'entrée 18 du générateur de séquences binaires pseudoaléatoires du codeur et qu'il se trouve désétalé par le fait même.

On remarque en outre que la description qui vient d'être faite pourrait être généralisée à un décodeur comportant un nombre pair de multiplicateurs avec un condensateur intercalé dans la chaîne à la sortie de chaque multiplicateur de rang impair pour éliminer la composante continue qu'il engendre et un filtre passe-bande intercalé à la sortie de chaque multiplicateur de rang pair pour éliminer l'harmonique 3 qu'il engendre.

Dans le cas où la porteuse Fe appliquée à l'entrée 12 du codeur est modulée par l'information à transmettre et où l'entrée 18 du générateur 11 de séquences binaires pseudoaléatoires du codeur est maintenue à un niveau logique constant, le décodeur de la figure 2 est suivi d'un récepteur adapté à la modulation de la porteuse Fe.

Dans le cas où la porteuse Fe est une fréquence pure et où l'information à transmettre est appliquée sous forme binaire à l'entrée 18 du générateur 11 de séquences binaires pseudoaléatoires du codeur, le décodeur de la figure 2 peut être suivi d'un démodulateur PSK classique qui restitue l'information.

Le décodeur qui vient d'être décrit relativement à la figure 2 présente l'intérêt d'effectuer un désétalement continu du signal reçu ne se limitant pas à un échantillonnage et cela, sans exiger une quelconque synchronisation.

La figure 3 représente un système de transmission d'une information analogique. Un codeur 30 du genre de celui de la figure 1 reçoit sur son entrée 12 le signal Fw d'un émetteur modulé en fréquence, un signal d'horloge H sur son entrée 16 et un niveau logique 1 sur l'entrée 18 de son générateur de séquences binaires pseudoaléatoires, et délivre en sortie un signal Sw dont le spectre des fréquences est étalé par une suite binaire pseudoaléatoire définie par un polynôme générateur particulier. Un décodeur 31 du genre de celui de la figure 2, adapté au polynôme générateur de la séquence binaire pseudoaléatoire du code d'étalement des fréquences reçoit le signal à spectre étalé Sw et fournit une réplique F'w du signal modulé en fréquence. Un démodulateur 32 connecté à la sortie du décodeur 31 restitue l'information analogique de base.

Le système de la figure 3 permet d'adapter facilement un émetteur et un récepteur de transmission FM classiques à la transmission en bande étalée :

- à l'émission il suffit d'insérer le codeur 30 entre les petits étages de l'émetteur de puissance,

- à la réception, l'insertion du décodeur 31, entre l'antenne et le récepteur reconstitue le spectre normal de la modulation de base.

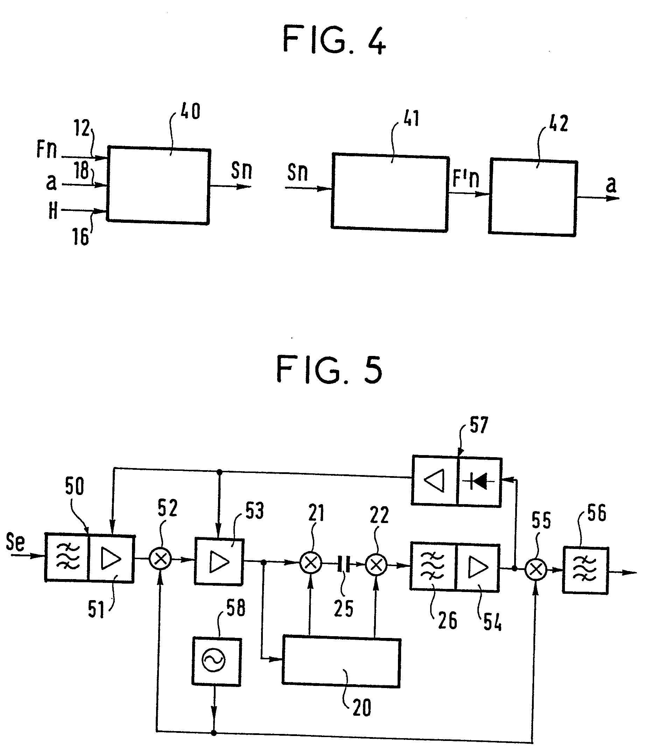

La figure 4 représente un système de transmission d'une information numérique. Le codeur 40, du genre de celui de la figure 1 reçoit sur son entrée 12 une porteuse de fréquence pure Fn, un signal d'horloge H sur son entrée 16 et l'information numérique à transmettre sur l'entrée 18 de son générateur de séquences binaires pseudoaléatoires et délivre en sortie un signal Sn constitué de la porteuse Fn modulée par retournement de phase à l'aide de l'information numérique ajoutée au code d'étalement du spectre par séquences binaires pseudoaléatoires. Un décodeur 41 du genre de celui de la figure 2, adapté au polynôme générateur de la séquence binaire pseudoaléatoire du code d'étalement des fréquences reçoit le signal transmis Sn et fournit un signal désétalé F'n modulé par retournement de phase à l'aide de l'information numérique a. Un démodulateur PSK classique 42 est connecté en sortie du décodeur 41 et délivre l'information numérique a.

Comme l'origine des phases est incertaine la polarité des signaux numériques peut être inversée après démodulation c'est pourquoi il y a intérêt à présenter au codeur 40, l'information numérique dans un code par transitions tel que le NRZ/M et non dans un code par états tel que le NRZ/L.

La figure 5 représente une version plus élaborée du décodeur de la figure 2. Le signal d'entrée Se est d'abord appliqué à un filtre de bande 50 qui élimine le bruit hors bande, amplifié par un amplificateur 51 et transposé par un multiplicateur 52 dans une plage de fréquence compatible avec les caractéristiques de la ligne à retard 20 du filtre non linéaire, non récursif, à domaine de temps du décodeur. Il est ensuite amplifié par un amplificateur 53 avant d'être soumis à ce filtre non linéaire qui est constitué comme dans le cas de la figure 2, de la ligne à retard de type analogique 20 avec sa prise intermédiaire et sa sortie couplée à son entrée par la chaîne des multiplicateurs 21, 22 séparés par une capacité 25 et suivis par un filtre passe-bande 26. Le signal à spectre désétalé disponible à la sortie du filtre passe-bande 26 est amplifié par un amplificateur 54 puis transposé à la fréquence d'accord d'un récepteur par un multiplicateur 55, un filtre passe-bande 56 disposé en sortie éliminant le battement indésirable. Un correcteur automatique de gain maintient le niveau constant sur le décodeur. Il se compose du circuit 57 qui commande le gain des amplificateurs 51 et 53. les multiplicateurs 52 et 55 sont excités par un oscillateur 58 qui est commun dans la figure 5 mais ils peuvent être également excités par des oscillateurs différents ou bien par des signaux prélevés sur le récepteur (synthétiseur).

On peut, sans sortir du cadre de l'invention modifier certaines dispositions ou remplacer certains moyens par des moyens équivalents.

REVENDICATIONS

1/ Système de transmission à étalement de spectre au moyen d'une modulation par retournement de phase selon un code binaire pseudoaléatoire dont le polynôme générateur comporte un nombre impair de termes, caractérisé en ce qu'il comporte, en réception, pour désétaler le signal reçu, un filtre non linéaire, non récursif à domaine de temps composé d'une ligne à retard (20) à prises intermédiaires simulant pour le signal reçu, le registre à décalage 15 défini par le polynôme générateur et d'une chaîne de multiplicateurs (21, 22) interconnectant l'entrée, les prises intermédiaires et la sortie de la ligne à retard (20) conformément au polynôme générateur.

2/ système selon la revendication 1, caractérisé en ce que la ligne à retard (20) est de type physique à ondes de surface ou de volume.

3/ Système selon la revendication 1, caractérisé en ce que la ligne à retard (20) est de type électrique à constantes localisées ou réparties.

4/ Système selon la revendication 1, caractérisé en ce que les multiplicateurs (21, 22) sont des modulateurs en anneau.

5/ Système selon la revendication 1, caractérisé en ce qu'il comporte en réception, un condensateur (25) intercalé dans la chaîne de multiplicateurs (21, 22) après chaque multiplicateur (21) de rang impair compté depuis l'entrée de la ligne à retard (20) et un filtre passe-bande (26) intercalé dans la chaîne de multiplicateurs (21, 22) après chaque multiplicateur (22) de rang pair compté depuis l'entrée de la ligne à retard (20).

0069928

1/2

FIG.1

FIG. 2

FIG. 3

# FIG. 4

# FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | IEEE TRANSACTIONS ON COMMUNICATION TECHNOLOGY, vol. COM-19, no. 6, décembre 1971, pages 1163-1172, New York (USA); C.R.CAHN: "Performance of digital matched filter correlator with unknown interference" *Page 1163, colonne de droite* | 1,3 | H 04 B 1/66 |
| | --- | | |
| X | IEEE JOURNAL OF OCEANIC ENGINEERING, vol. OE-2, no. 3, juillet 1977, pages 274-285, New York (USA); A.WEINBERG et al.: "A novel concept for a satellite-based maritime search and rescue system". *Page 278, colonne de droite, lignes 20-25* | 1,3 | |
| | --- | | **DOMAINES TECHNIQUES RECHERCHES (Int. Cl. ³)** |
| A | CABLES AND TRANSMISSION, vol. 28, no. 3, juillet 1974, pages 240-257, Paris (FR); J.M.GAUTHIER: "Modem pour circuits de groupe primaire et émetteur-récepteur en bande de base associé". *Page 243, lignes 37-47; page 244, lignes 1-10* | 1-5 | H 04 B 1/66 <br> H 04 B 7/185 <br> H 04 L 25/49 |
| | --- | | |
| | -/- | | |

Le présent rapport de recherche a été établi pour toutes les revendications

| Lieu de la recherche | Date d'achèvement de la recherche | Examinateur |
|---|---|---|
| LA HAYE | 15-10-1982 | GEISLER J.A.R. |

Office européen
des brevets

**RAPPORT DE RECHERCHE EUROPEENNE**

EP  82 10 5872

| | **DOCUMENTS CONSIDERES COMME PERTINENTS** | | Page  2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | SIEMENS FORSCHUNGS- & ENTWICKLUNGS-BERICHTE, vol. 6, no. 1, 1977, pages 1-5, Berlin (DE); K.H.MOHRMANN: "Realisierung von Scramblern für PCM-Signale hoher Taktfrequenz". *Page 3, paragraphe 3.2* | 1-5 | |
| | --- | | |
| A | US-A-3 916 313 (LOWRY) *Colonne 1, lignes 49-55* | 1-5 | |
| | ----- | | |
| | | | **DOMAINES TECHNIQUES RECHERCHES (Int. Cl. ³)** |

| | | |
|---|---|---|
| Le présent rapport de recherche a été établi pour toutes les revendications | | |
| Lieu de la recherche | Date o achevement de la recherche | Examinateur |
| LA HAYE | 15-10-1982 | GEISLER J.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant